# EUROPEAN PATENT APPLICATION

(11) **EP 1 073 013 A1**
(43) Date of publication of application: **31.01.2001**
(21) Application number: 99480074.6
(22) Date of filing: 29.07.1999
(51) Int. Cl.: G06N 3/06, G06N 3/08

(54) **Self-adaptable artificial neural networks**

(71) Applicant: International Business Machines Corporation, Armonk, N.Y. 10504 (US)
(72) Inventor: Imbert de Tremiolles, Ghislain, 06570 Saint-Paul (FR); Tannhof, Pascal, 77300 Fontainebleau (FR)
(74) Representative: Klein, Daniel Jacques Henri

(57) **Abstract**

A self-adaptable artificial neural network (ANN) based on a mapping of the input space consisting of a chain of elementary processors (EPs) wherein each EP is provided with memory means to memorize a prototype containing n components, distance evaluation means to compute the distance between an input vector presented to the ANN and the prototype stored therein and flag means to store a flag value which indicates if the EP is free or not. Each EP is provided with register means to store control bits to define its status and communication means capable to transmit this status and the computed distance to the next EP in the ANN. When an input vector having a number r of components greater than n is presented to the ANN, the role of these registers and communication means is to permit the linkage of the adequate number of EPs in a new entity of increased memory capacity and which behaves like a single EP. The linkage is dynamically and automatically performed during the learning and classification phases.

## Description

### FIELD OF THE INVENTION

The present invention relates to artificial neural networks (ANNs) based upon a mapping of the input space and more particularly to an ANN wherein the number of input vector components is automatically and dynamically adjusted, whatever this number, so that it is self-adaptable to input vectors of any size. The self-adaptable ANN of the present invention relies on an improved neuron structure which is derived from the conventional one by the addition of an innovative circuit. When implemented in a silicon chip, this circuit only requires a minimal additional silicon area. The present invention also relates to a method that automatically and dynamically links the required number of improved neurons to form a group that is adapted to store an input vector of any size as a prototype or to classifies it and which behaves as a single neuron in the ANN.

### BACKGROUND OF THE INVENTION

In today's process, a lot of recognition, prediction and more generally data processing tasks are performed using reference databases to characterize input data. Depending upon the problem to be solved, the memorized patterns stored in these databases are sub-images, sub-signals, subsets of data and the like. To simplify processing, these memorized patterns, referred to as prototypes, are generally represented by vectors. Well known methods for characterizing new input vectors using reference databases containing reference vectors stored as prototypes are the input space mapping neural network algorithms such as the K-Nearest-Neighbor (KNN) and the Region Of Influence (ROI). The goal of these algorithms is to compute output values, typically the distances between the input vector and all the prototypes in order to select the "winning neurons", for example, the closest ones. An important feature of these algorithms is the size of the vectors that are used, i.e. the number of components, which has a great impact on the required memory in each of the neurons composing the ANN, but also their response time and the quality of this response. This size is determined by the problem to be solved and its complexity, but also by the knowledge that can be used to solve this problem. Due to the nature of these algorithms, hardware implementation using parallel processors to evaluate said distances are well adapted for real-time applications. A neuron is a system that is at least able to store the components of a prototype and compute a distance between this prototype and an input vector presented by a user or a computer. Because in the present application, a neuron can be either made of electronic circuits or software objects, it will be designated as an elementary processor (EP) for sake of simplicity. Thus, considering this kind of algorithms, the number of prototype components which determines the required memory capacity in each neuron must be well adapted. If this number is less than this memory capacity, the EP memory and control logic are not optimized because they are not fully exploited and if it is greater, the memory capacity is insufficient to store all the prototype components.

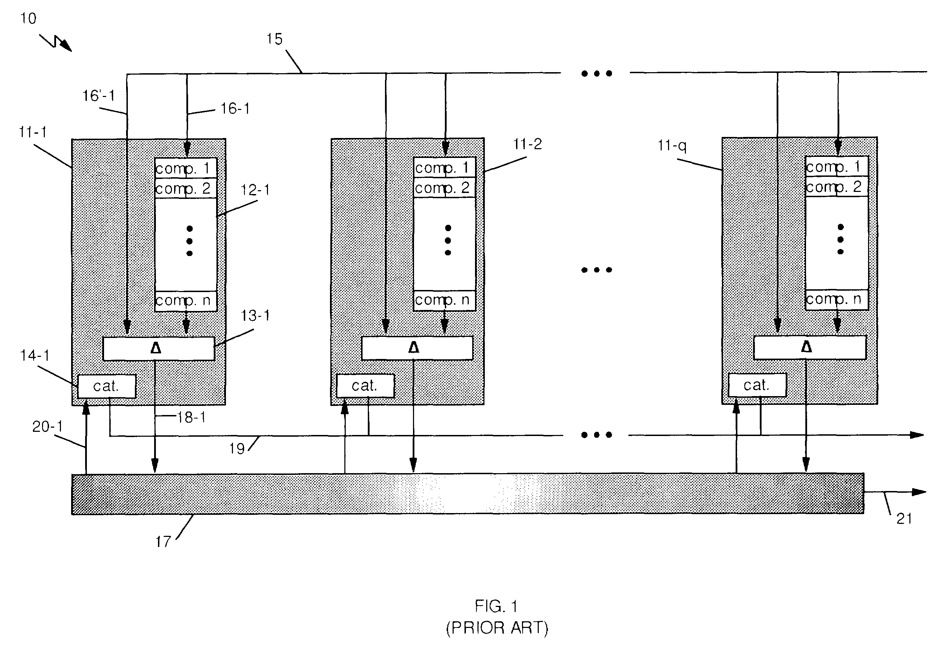

FIG. 1 shows the architecture of a conventional ANN referenced 10 comprised of a plurality of standard EPs 11-1, 11-2, ..., 11-q which are used in parallel during the classification (or recognition) phase to evaluate the distances between all the memorized prototypes that are associated to each EP and the input vector that is fed into the ANN by the host computer (not shown). Now let us consider FIG. 1, and more particularly the first EP in the ANN 10 bearing numeral 11-1. It is provided with a memory 12-1 to store the n components (comp. 1 to comp. n) of the prototype associated thereto, a distance evaluation circuit 13-1 and a category register 14-1 to store the category assigned to the prototype. A common input bus 15 interconnects all the EPs of the ANN 10 with the host computer. Each EP is fed either by a single bus or by two buses referenced 16-1 and 16'-1 derived from the common input bus 15 as shown in FIG. 1. Still considering EP 11-1, bus 16-1 is used to feed the prototype components into memory means 12-1 during the learning phase. The other bus 16'-1 is used to apply the components of the input vector to the distance evaluation circuit 13-1 which also receive the output of the memory 12-1 to compute the distance between the input vector and the memorized prototype during the classification phase. The computed distance is transmitted to a number sorting unit 17 via a dedicated bus 18-1. The number sorting unit 17 is used to sort all the distances computed by the EPs of ANN 10 in order to select the winning EPs. Generally, this number sorting unit 17 is a minimum number searching unit that allows to find the closest matches. At least one category is assigned to each EP to characterize the prototype associated thereto. The categories associated with the winning EPs are made available on a dedicated bus 19 (which is connected to the category register of each EP) under the control of number sorting unit 17 via bus 20-1. A similar construction exists for each EP 11-2 to 11-q of ANN 10. At the end of the classification phase, the number sorting unit 17 either generates a distance on its output bus 21 for exploitation by the user or selects the winning EP(s) to make its category available on the category bus 19. This conventional ANN architecture is similar to the one that is described in the above cited US Patent N° 5,717,832 assigned to IBM Corp. and Guy Paillet.

Now let us assume that an input vector of r components is presented on input bus 15 by the host computer, either for being memorized as a prototype in the memory (having a capacity of n components) of a free EP during the learning phase or for evaluating its distance with the previously memorized prototypes during the classification phase. If r > n, a number of components (r - n) will not be stored in the learning phase, so that during the classification phase, the distance evaluation will not be accurate degrading thereby the ANN response quality. The response of ANN manufacturer will thus to build EPs with the largest possible memory capacity. But, if an input vector is having a small number r' of components (r' < n) is presented to the ANN, in the learning phase, the prototype will be memorized with a significant waste of memory capacity (n - r' locations). It is thus clear that ANN 10 comprised of such standard EPs is particularly not adapted to handle input vectors that have a number of components that is different than n.

None known existing ANN architecture allows to handle such a different number of input vector components when each of the EPs composing the ANN has a determined memory capacity. One can envision an architecture based on a dual EP structure and a shared memory scheme wherein a dedicated circuit would allow to use this dual EP either as two single EPs, working independently, each having a memory capacity of n with a common computation unit or as a dual EP to double the memory capacity to 2xn. The main drawback of this architecture is the number of components that can be stored, that can only be n (single EP) or 2xn (dual EP) but neither less nor more. Still another drawback of this architecture concerns the learning phase, because it would be necessary to set the dual EP in one of its two operating modes (single/dual) before memorizing the input vector components as a prototype and thus to know the number of these components before starting the memorization process.

### SUMMARY OF THE PRESENT INVENTION

It is therefore a primary object of the present invention to provide a self-adaptable artificial neural network (ANN) composed of improved EPs that is capable to adapt to input vectors of any size, i.e. the number of the input vector components is not limited.

It is another object of the present invention to provide a self-adaptable artificial neural network (ANN) composed of improved EPs wherein there is an automatic and dynamic adaptation of the memorization means to the number of the input vector components.

It is another object of the present invention to provide a self-adaptable artificial neural network (ANN) composed of improved EPs wherein the memorization means are optimized allowing thereby the design of EPs with a limited memory capacity.

It is another object of the present invention to provide a self-adaptable artificial neural network (ANN) composed of improved EPs wherein a circuit is provided in each EP for automatically and dynamically adjusting the number of the input vector components that can be generalized to parallel processing systems.

It is another object of the present invention to provide a self-adaptable artificial neural network (ANN) composed of improved EPs wherein a circuit is provided in each EP for automatically and dynamically adjusting the number of the input vector components which occupies only a minimal area when the ANN is built in a silicon chip.

It is still another further object of the present invention to provide a method to implement a self-adaptable ANN that automatically and dynamically adapts itself to an input vector of any size.

The accomplishment of these and other related objects is achieved by the circuit and the method of the present invention.

According to the present invention, there is described a self-adaptable artificial neural network wherein the number of components is automatically and dynamically adjusted comprising :
an artificial neural network (ANN) consisting of a chain of elementary processors (EPs) or neurons wherein each EP is provided with memory means to memorize a prototype containing n components, distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) and the activation (A) bits to define its status and communication means capable to transmit this status and the computed distance to at least one of its two neighboring EPs.

Still according to the present invention, there is described a method for automatically adjusting the number of components in an artificial neural network with a learning phase and a classification phase comprising the steps of,
a) providing an artificial neural network (ANN) consisting of a chain of elementary processors (EPs) or neurons wherein each EP is provided with memory means to memorize a prototype containing n components, distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) and the activation (A) bits to define its status and communication means capable to transmit this status and the computed distance to at least one of its two neighboring EPs;
b) initializing the ANN by setting the H bits and the A bits of all the EPs to a first logical value;
c) setting the distance values stored in all the EPS to zero;
d) presenting an input vector of r components to the ANN;
e) selecting the first free EP of the ANN;
f) setting its H bit to a second logic value;
g) selecting the EPs of the ANN which H bits are set to the second logic value;
h) setting their A bit to a second logic value;
i) if the number of input vector components is inferior or equal to n, comparing the r components of said input vector with the first r components of said activated EPs to obtain distances and memorizing all the components of the input vector in said activated and free EP, else if input vector component number is greater than n, comparing the first n components of said input vector with the components memorized in said activated EPs to obtain distances and memorizing the first n components of the input vector in said activated and free EP;
j) setting the A bits of the neighbor of said activated EPs to the second logic value and setting the A bits of the previous activated EPs to the first logic value and transmitting said distance of the previous activated EPs to the neighboring activated EP;
k) if the number of remaining components is inferior or equal to n, comparing the remaining components of said input vector with the components of said activated EPs to obtain intermediate resulting distances that are added to said distances and memorizing said remaining components in said activated and free EP, else, if the number of remaining input vector components is greater than n, comparing the first n remaining components of said input vector with the components memorized in said activated EPs to obtain intermediate resulting distances that are added to said distances and memorizing the first n remaining components of said input vector in said activated and free EP;
l) repeating the last 2 steps j) and k) until the last component of said input vector has been reached, so that all the global distances between the input vector and the prototypes are computed;
m) confirming or not the memorization of the input vector as prototype depending upon user result and/or resulting distances.
n) repeating the steps c) to m) to present another input vector to the ANN.

The goal of the present invention is thus to provide a circuit and a method that allow to create a self-adaptable ANN capable to adapt to an input vector of any size, whatever number of its components, based on a standard EP that is improved by an innovative circuit wherein the memory means in each standard EP are optimized. In the method, the step of linking several improved EPs in order to create a new entity adapted to any input vector is essential.

The novel features believed to be characteristic of this invention are set forth in the appended claims. The invention itself, however, as well as these and other related objects and advantages thereof, will be best understood by reference to the following detailed description to be read in conjunction with the accompanying drawings.

### BRIEF DESCRIPTION OF THE DRAWINGS

FIG. 1 shows the architecture of a conventional artificial neural network (ANN) based upon an input space mapping algorithm implementing a plurality of standard EPs.

FIG. 2 shows the conventional ANN of FIG. 1 wherein each EP now includes the innovative circuit of the present invention to transform it in an improved EP and wherein a group of p improved EPs forming an entity, called a super EP (SEP), capable to handle a number of input vector components up to pxn components has been built.

FIG. 3 shows a partial view of the SEP of FIG. 2 wherein the elementary circuits composing said innovative circuit are detailed.

FIG. 4 shows the main steps of the algorithm that illustrates the method of the present invention.

FIG. 5, which is comprised of FIGS. 5a-5e, schematically shows the evolution of the essential register contents in the operating sequence of two SEPs, each being comprised of two improved EPs, to illustrate the method of the present invention in a simple practical case.

### DESCRIPTION OF THE PREFERRED EMBODIMENT

The aim of the circuit and method of the present invention is to provide the design of an improved EP having the outstanding capacity to be linked with other improved EPs, (each EP being still only capable to store a fixed number of components, e.g. n as the standard EP did) to create a new entity that is capable to memorize the components of an input vector having r components wherein r is greater than n and that normally behaves as a single EP in the ANN.

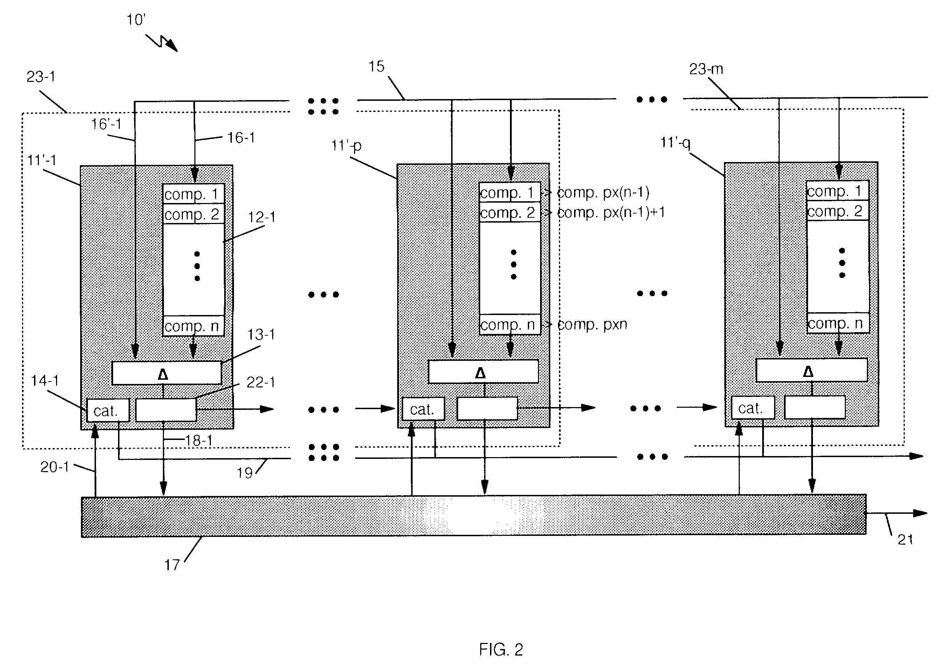

According to the present invention, there is provided an innovative circuit that will be placed in each standard EP composing ANN 10 of FIG. 1, the role of which will be to permit this linkage. In essence, this innovative circuit will transmit data from one EP to one of its two neighbors in order to "expand" it. For sake of simplicity, we consider that each improved EP (e.g. EP(i)) is able to transmit data to its neighbor (e.g. EP(i+1)) located on its right side. The data transmitted between two improved EPs will be of two kinds : the EP status and the resulting computed distance as it will be now described by reference to FIG. 2.

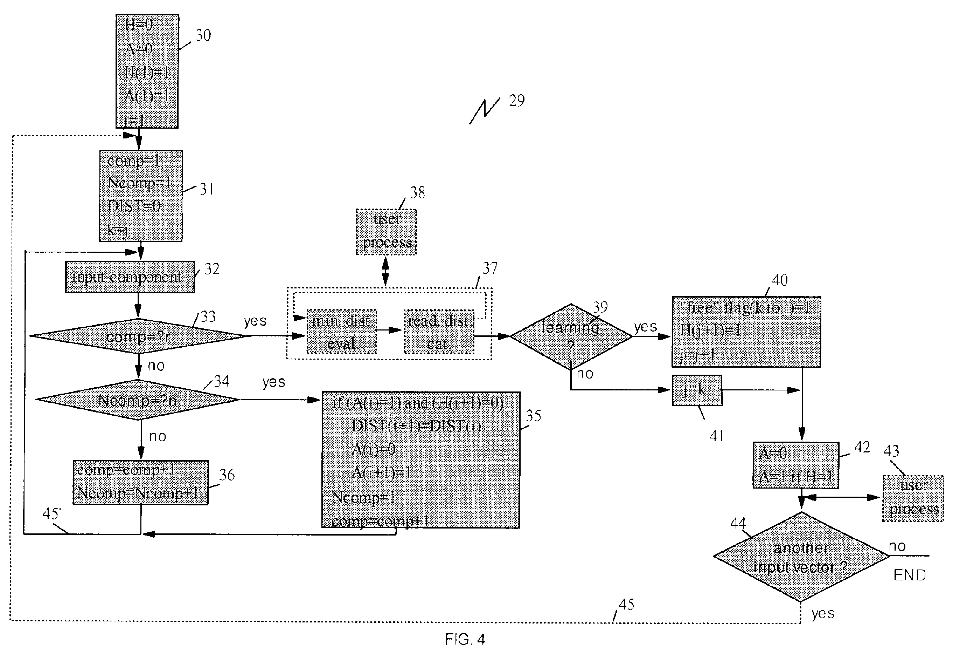

FIG. 2 shows the architecture of the self-adaptable ANN referenced 10' of the present invention. With regards to FIG. 1, like reference numerals (with prime) are now used in the following drawings to designate identical (corresponding) parts. As apparent in FIG. 2, ANN 10' is still comprised of q EPs that are now referenced 11'-1, ..., 11'-q to take in account that they have been modified. In essence, each improved EP (e.g. 11'-1) only differs from the original standard EP of FIG.1 (e.g. 11-1) by the addition of the innovative circuit of the present invention (e.g. 22-1). This innovative circuit permits a communication between two adjacent improved EPs, but for sake of simplicity in the instant case, only with the EP located on its right. This functionality will be simply met thanks to two control bits which are required for each improved EP. For a determined EP, the role of this circuit is to transmit its status and the distance it has computed to its neighbor in the ANN 10' to allow it to evaluate an intermediate distance. When an input vector having a number r of components greater then n is presented to ANN 10', this circuit will allow to link the appropriate number of improved EPs to meet that number r. For instance, let us assume that a group of p improved EPs are linked according to the present invention, the memory capacity of this group is increased to pxn with pxn >= r. Such a group of p EPs containing each a memory capacity of n components will be referred to hereinbelow as a "super elementary processor" (SEP). A SEP referenced 23-1 and comprised of EPs 11'-1 to 11'-p is shown in FIG. 2. During the classification phase, the transmission of the elementary distance that is continuously adapted while progressing in the chain of p improved EPs forming SEP 23-1 allows the last EP, i.e. EP 11'-p, to compute the global distance between an input vector that is presented to ANN 10' and the prototype of r components that has been memorized in SEP 23-1 during the learning phase. Therefore, SEP 23-1 exactly behaves as the single standard EP of FIG. 1 but with an increased memory capacity of pxn components. Still according to an essential feature of the present invention, the linkage of EPs 11'-1 to 11'-p to create SEP 23-1 is automatically and dynamically performed as it will be explained in due course by reference to FIG. 4.

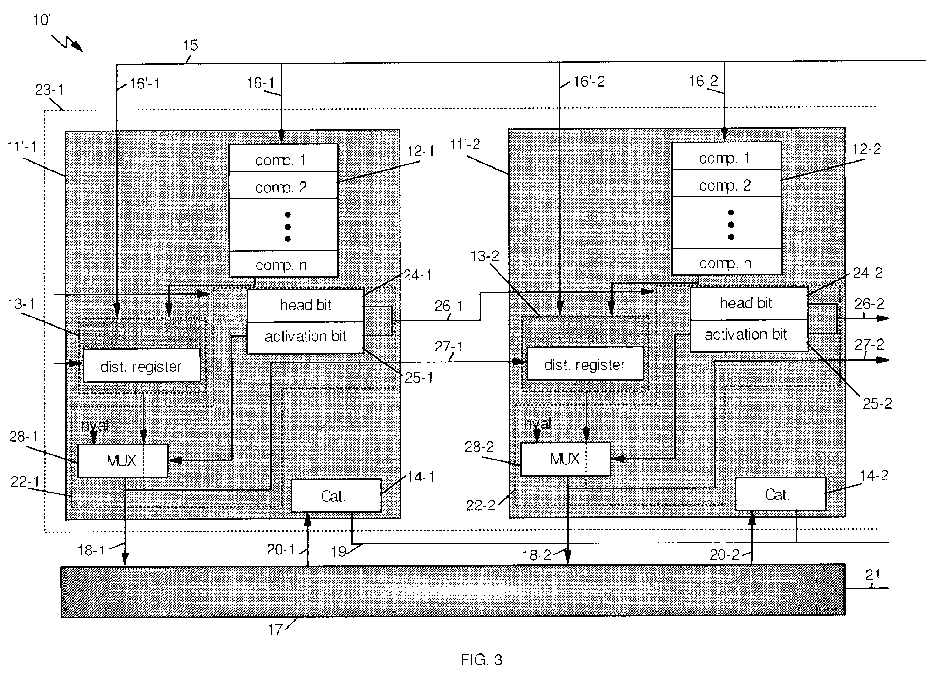

FIG. 3 shows the elementary circuits composing the innovative circuit of the present invention for the two first improved EPs 11'-1 and 11'-2 of SEP 23-1 of FIG. 2. Now turning to FIG. 3 and more particularly to EP 11'-1, circuit 23-1 includes two one-bit registers 24-1 and 25-1 to store the two control bits mentioned above that are fed to the next EP 11'-2 via a first communication bus 26-1 common to both registers. It further includes a second communication bus 27-1 that is used to transmit the distance stored in the distance register of distance evaluation circuit 13-1 in EP 11'-1 to the corresponding distance register of distance evaluation circuit 13-2 of EP 11'-2. Optionally, it may include a two-way multiplexer or selector 28-1 that is inserted between the distance evaluation circuit 13-1 and the number sorting unit 17. In this case, communication bus 27-1 is just derived from bus 18-1. The first control bit called the "head" bit, referred to hereinbelow as the H bit, is used to designate the first EP in a SEP. In the instant case, the first EP in SEP 23-1 is EP 11'-1 which will be referred to as the "head elementary processor" (HEP) and its H bit will be set to one in register 24-1. EP 11'-2 represents the second EP of this SEP 23-1 and will be referred as the "child elementary processor" (CEP). Its associated H bit will be set to zero in register 24-2. The second control bit is used to set and identify the activated/not activated state of each EP during the classification or the learning phase. The second control bit called the "activation" bit, will be referred to hereinbelow as the A bit. During the learning phase, the A bit is used to select the EP that must memorize the input vector components. During the classification phase, the A bit is used to select and activate the EPs that must evaluate the distance between the input vector components and the prototype components stored in these activated EPs. The H and A bits represent the status of each EP in ANN 10'. As apparent in FIG. 3, the status signal generated by EP 11'-1 is applied to the next EP 11'-2 via bus 26-1 and more particularly to its control logic (not shown for sake of simplicity). This particular aspect will be best understood in due course by reference to FIG. 4. As still apparent in FIG. 3, the A bit also controls the selector 28-1. This selector can be used to deselect the EP, when the number sorting unit is a minimum number searching unit 17. Selector 28-1 receives the distance signal supplied by the distance evaluation circuit 13-1 (stored in the distance register thereof) and a neutral value (nval). For example, using a minimum number searching unit to sort the distances, the neutral value will be equal to the maximum value of the distance as a result of its coding. The selector 28-1 thus selects either the distance stored in the distance register for transmission to the number sorting unit 17 and to the distance register 24-2 of the next EP 11'-2 via bus 27-1 or the nval number to deselect EP 11'-1.

Furthermore, selectors 28-1 and 28-2 allow to sort distances and to select the winning EPs after having fed the first n components, the first 2n components, and so on. Thus, this process could also use a pipeline's like mode in order to increase the response time of the ANN 10'. During the evaluation of the distance of the input vector components from n+1 to 2n, the number sorting unit 17 is able to look for the winning EPs using the distances computed on the first n components. This process can also be used for the first 2n components during the computation of the distances corresponding to the components from 2n+1 to 3n, and so on.

FIG. 4 shows a schematic representation of the algorithm labeled 29 which describes the main steps of the method of the present invention, assuming for sake of simplicity, that the r input vector components are presented to the adaptive ANN 10' in a sequential way, i.e. one component after another. To clarify the explanation that follows, indexes i, j and k will be used, wherein i represents an EP index, j is the index of the EP that is activated to memorize a part of the input vector and k is the index of the EP that is the HEP used to memorize the input vector components.

An initialization phase is required to reset the two status bits (H and A) of all the EPs of ANN 10' to zero. The H1 and A1 bits of the first EP 11'-1 of ANN 10' are then set to one in order to "prepare" it for the learning phase, i.e. to indicate that the first EP represents a HEP and that it is ready to memorize the n first components of the input vector to create a new prototype (box 30). Because it is important for the ANN 10' to be able to memorize an input vector only if it has not been correctly classified, it is worthwhile to not differentiate the presentation of the input vector components either during the learning or the classification (recognition) phase. To that end, each component sent to the ANN 10' is simultaneously compared with the corresponding memorized components for distance evaluations (classification) and memorized in a free EP or SEP (learning) . It is common practice in the hardware implementation of conventional input space mapping based ANNs to assign a flag to each EP to indicate whether it is "free" or not. An EP which has not memorized a prototype yet is a free EP (for more details please refer to US patent 5 717, 832 cited above). Two component pointers are defined: comp which is the real pointer of the components of the input vector, i.e. the SEP component pointer and Ncomp which is a local pointer used inside each EP. Before any learning or classification takes place, these pointers comp and Ncomp are set to zero to point the first component location in each EP and each SEP respectively (box 31). The components are fed one by one into ANN 10' (box 32). A test is performed to determine if the last component r of the input vector has been reached or not (box 33). If not, another test is performed to compare the EPs local component pointers Ncomp with the maximum number n of components that can be stored in an EP (box 34). If the maximum number n of components that can be stored in a determined EP has been reached, i.e. if the test is positive, the distance evaluated by each activated EP (an EP which A bit is set to one) is transferred to its neighbor, in turn, the A bit of this neighbor is set to one and the A bit of all previous activated EPs is reset to zero (see the step sequence shown in box 35). The process is then repeated until all the components of the input vector have been fed into the ANN 10' (loop 45'). If the maximum number of components that can be stored in an EP has not been reached, then the component pointers, comp and Ncomp, are increased by adding a 1 (box 36). Likewise, the process is then repeated until all the components of the input vector have been fed into the ANN 10' still via loop 45'. If the last component of the input vector has been reached, i.e. the test performed in box 33 is positive, the minimum distances can be optionally evaluated and read with the categories assigned to each of the "winning" EPs (box 37). At this step, the user could, if he so needs, add an external process such as using evaluated distances and associated categories for determining if he want to memorize the last input vector as prototype or not (box 38). A new test is performed to determine if the user chooses to learn, i.e. memorize the input vector presented to the ANN 10' as a prototype and the category associated thereto or not (box 39). If yes, the "free" flags of all the EPs that have been used for memorizing the input vector components, i.e. ranging from EP(k) (the HEP) to EP(j) (the last activated) are set to one, and the H bit of EP(j+1) (the "free" neighbor EP of the last EP used to memorize the input vector i.e. EP(j)) is set to one in order to indicate that EP(j+1) is the next "ready to memorize" HEP (box 40). If the user does not want to memorize the input vector, the "ready to memorize" HEP is the same as the one used to memorize the last input vector (box 41). Then, all the A bits are reset to zero except the A bits of the HEPs that are set to one (box 42). At this step, the user could, if he so needs, add an external process such as using evaluated distances and associated categories for classification purposes (box 43). A test is then performed to check whether another input vector is being presented to the ANN 10' or not (box 44). If this test is positive, the process is then repeated (loop 45) until all the input vectors have been presented to the ANN 10'. Otherwise, the process is terminated (END). As a result, the internal configuration of each EP is automatically and dynamically adjusted without requiring any user/host computer action to create SEPs adapted to input vectors of any size.

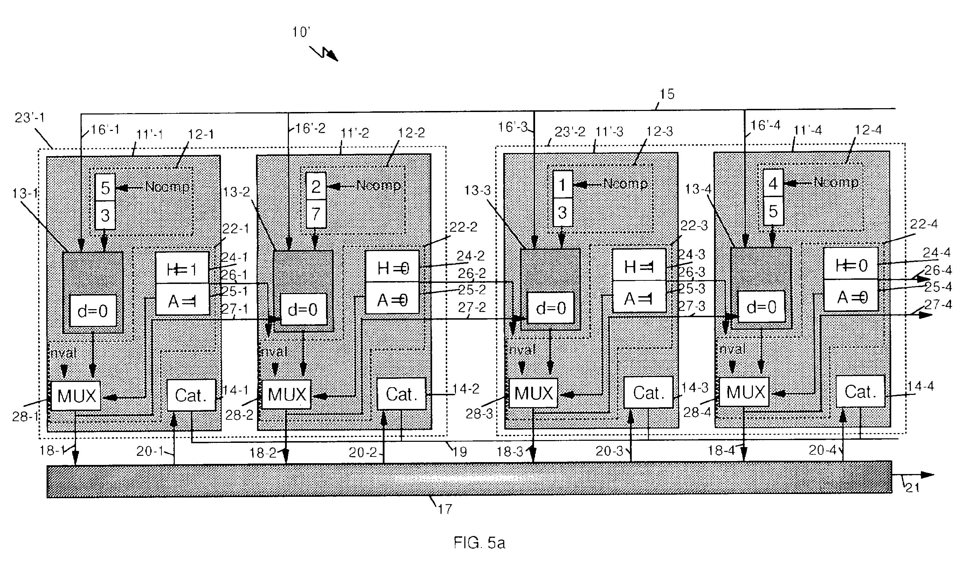

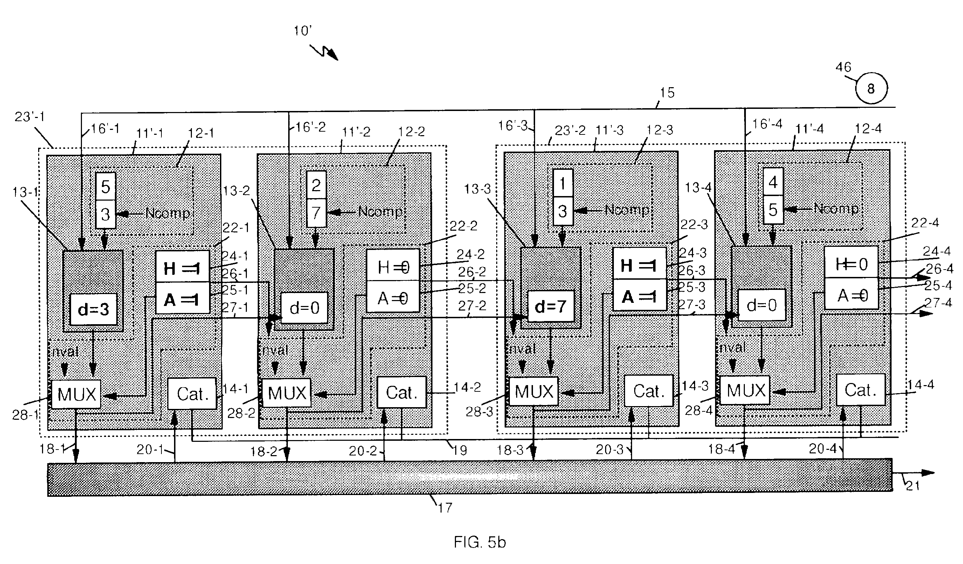

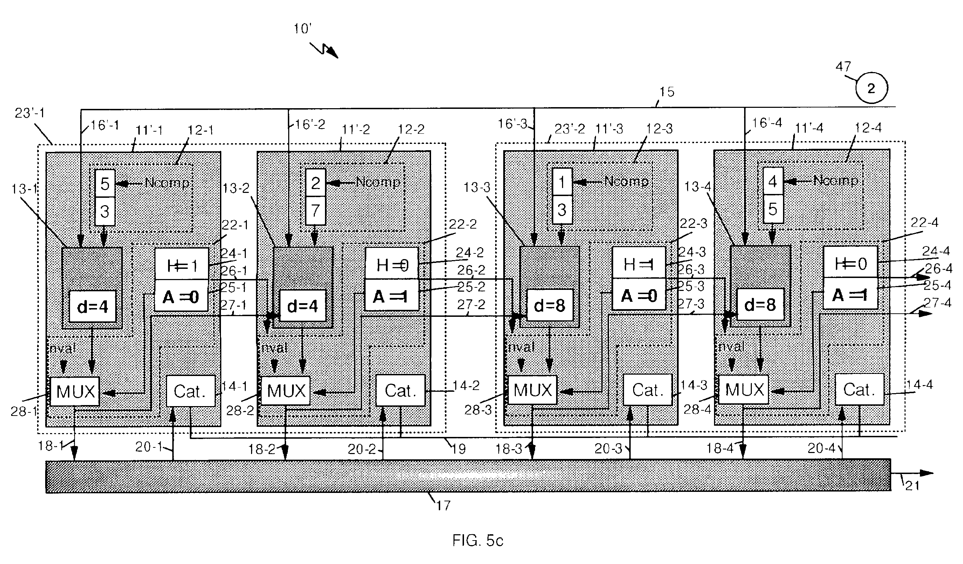

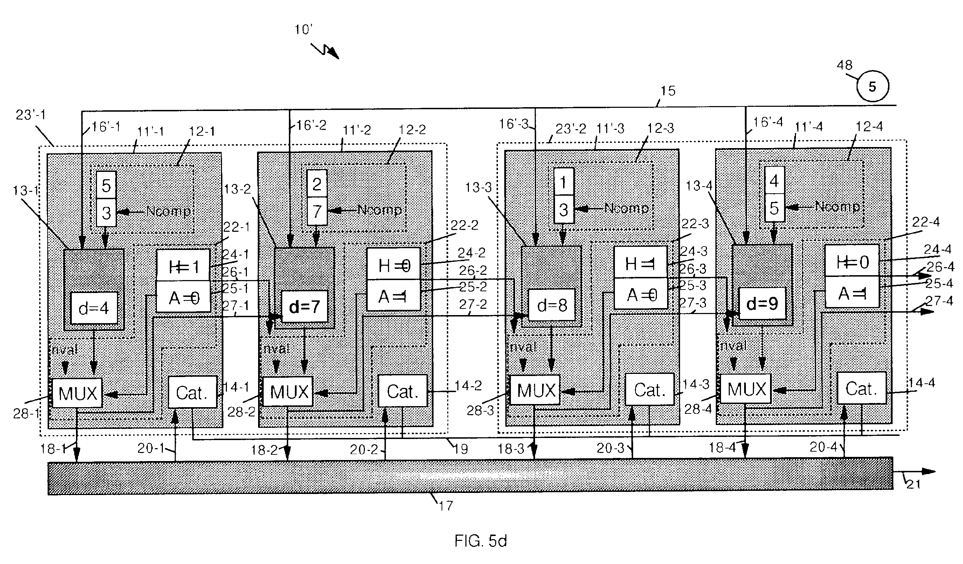

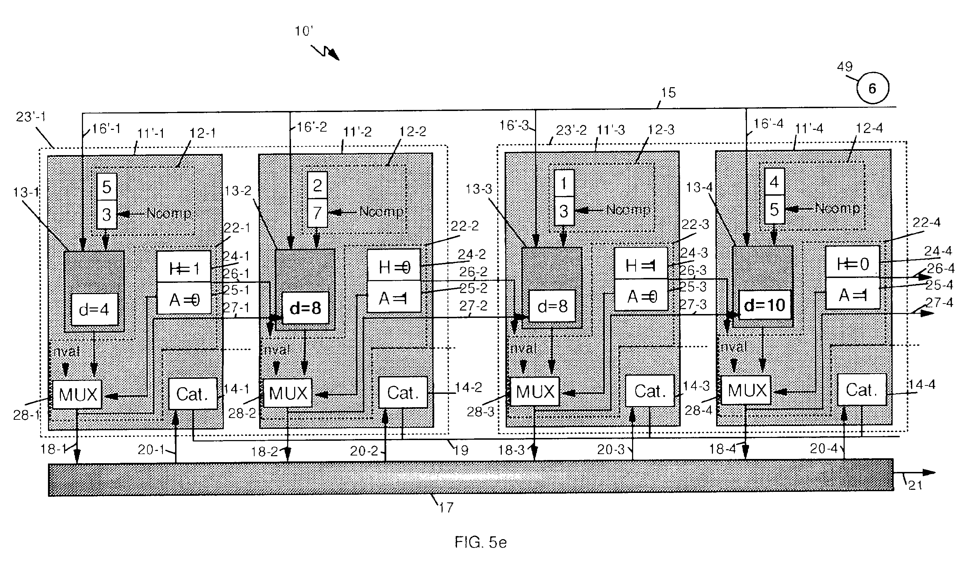

To illustrate the algorithm of FIG. 4, let us consider the example described by reference to FIG. 5 in which, for sake of simplicity, it is assumed that input vector components are presented to the ANN 10' in a sequential way, one component after another. In this case, it is also assumed that the learning phase has already been performed to store two prototypes having four components in an ANN 10' composed of four improved EPs having only two memory locations each, so that, according to the present invention, two SEPs 23-1 and 23-2 each composed of two EPs are required.

FIG. 5a presents the ANN 10' at the initial stage after the learning phase. One can remark that the H bit of the first EP of each SEP is set to one, others H bits are set to zero. At this stage, the activated EPs are the HEPs, and thus their A bits are set to one. As mentioned above, the component pointer Ncomp of all the EPs are positioned on the first component location of each of them. The distance d associated to each EP is equal to zero because none evaluation has been done as of yet. The first prototype has four components (5,3,2,7) that are memorized in the two EPs 11'-1 and 11'-2 of SEP 23-1 and the second prototype has also four components (1,3,4,5) that are memorized in EPs 11'-3 and 11'-4 of SEP 23-2.

The first step when recognizing an input vector by the ANN 10' consists in feeding the input vector components. As shown in FIG. 5b, the first incoming component of the input vector illustrated by circle 46 has the value of 8. The activated EPs are using this value to compute the difference between it and their first component. Regarding EP 11'-1 that is activated (A bit = 1), its first component is equal to 5, so that the difference is 3 (|8-5|) as shown in the distance register of its distance evaluation circuit 13-1. As mentioned above, the non-activated EPs are idle so that EP 11'-2 (A bit = 0) does not evaluate any distance. Due to the parallel architecture, EPs 11'-3 and 11'-4 have the same behavior than EPs 11'-1 and 11'-2 respectively. After having computed the distance for each activated EP, the component pointers are increased to select the second component of each EP as shown in FIG. 5b. Thus, after having fed the first input vector component, computed the distance and increased the component pointers, the contents of status and distance registers of the EPs as well as the component pointers position are indicated in FIG. 5b.

Then, the second component of the input vector is fed into the ANN 10' with a value of 2, as shown in circle 47 in FIG. 5c. As mentioned above the activated EPs compute the distances. Turning to activated EP 11'-1, the difference between the input vector component value and the second component memorized in EP 11'-1 is 1 (|2-3|). Thus, the global distance stored in distance register of distance evaluation circuit 13-1 is 4 (|8-5|+|2-3|). As EP 11'-2 is still not activated, it is idle, so that it does not compute any distance. Behavior of EPs 11'-3 and 11'-4 is still the same as EPs 11'-1 and 11'-2 respectively. As each EP contains only two components, the last component thereof has been reached, so that the A bit values change : the A bits of the activated EPs 11'-1 and 11'-3 are set to zero while the A bits of the EPs located to their right side, i.e. EPs 11'-2 and 11'-4, are set to one and the component pointers are initialized (positioned on the first component of each EP). Furthermore, the distances that have been computed in the last activated EPs are copied into the distance register of the distance evaluation circuit of the new activated EPs. The value of 4 that has been computed in EP 11'-1 is copied into the distance register of the distance evaluation circuit of EP 11'-2 and the value of 8 that has been computed in EP 11'-3 is copied into the distance register of the distance evaluation circuit of EP 11'-4. FIG. 5c illustrates the contents of the status and distance registers of the EPs as well as the component pointer positions after having processed the second incoming input vector component.

The third input vector component is then fed into the ANN 10', its value is 5, as shown in circle 48 in FIG. 5d. As EPs 11'-1 and 11'-3 are no longer activated, they do not compute any distance. The activated EPs 11'-2 and 11'-4 are using the incoming input vector component value to compute distances. The first component of EP 11'-2 that has the value of 2 allows to compute the difference of 3 (|5-2|) that is added to the value stored in its distance register. Thus, the global distance stored in the distance register of the distance evaluation circuit 13-2 is 7 (|8-5|+|2-3|+|5-2|). Using the same process, the value obtained in the distance register of the distance evaluation circuit 13-4 is 9. When the distances have been computed, the component pointers are increased. FIG. 5d illustrates the content of the status and distance registers of the EPs as well as the component pointers position after having processed the third incoming input vector component.

The last component of the input vector is then fed into the ANN 10' with a value of 6, as shown in circle 49 in FIG. 5e. Activated EPs 11'-2 and 11'-4 are using this value to compute new distances while the EPs 11'-1 and 11'-3 are still idle. The value obtained in the distance register of the evaluation circuit 13-2 is 8 (|8-5|+|2-3|+|5-2|+|6-7|) and the resulting distance computed by EP 11'-4 is 10 (|8-1|+|2-3|+|5-4|+|6-5|). As this input vector component corresponds to the last one, the activated EPs keep their status, so that their A bits do not change. The distances stored in the distance registers of the activated EPs 11'-2 and 11'-4 correspond to the global distances 8 and 10 between the input vector (8,2,5,6) and the two stored prototypes (5,3,2,7) and (1,3,4,5) respectively.

At this final stage, all the distances to be compared have been computed. The number sorting unit 17, which is a Minimum Number Searching Unit (MNSU) for sake of simplicity, is then used to find the minimum distance of the two distances memorized in the distance registers of activated EPs 11'-2 and 11'-4. In this example, the winning EP is 11'-2 because 11'-1 and 11'-3 are not activated and the resulting distance computed in EP 11'-4, i.e. 10, is greater than the resulting distance computed in EP 11'-2, i.e. 8.

One of the advantages that result from the present invention is possibility to build EP with more limited memory capacity to optimally match input vectors with a small number of components, while input vectors having a great number of components will be also adequately handled as a result of the flexible SET construction.

In addition, it is also to be noted that the memory capacity is not necessarily implemented in each improved EP of the self-adaptable ANN, a concept of a common memory shared by all the improved EPs can be envisioned as well by the skilled professional.

It will be apparent to those skilled in the art that various modifications may be made in the process and products illustratively described therein, without departing from the spirit or scope of the invention as expressed in the following claims.

## Claims

1. A self-adaptable artificial neural network comprising :
an artificial neural network (ANN) consisting of a chain of elementary processors (EPs) or neurons wherein each EP is provided with memory means to memorize a prototype containing n components, distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) and the activation (A) bits to define its status and communication means capable to transmit this status and the computed distance to at least one of its two neighboring EPs.

2. The self-adaptable artificial neural network of claim 1 comprising one group of p adjacent EPs referred to as a "super elementary processor" (SEP), with a memory capacity of pxn wherein the H bit of the first EP of the SEP is set to a first logical value to designate it as the "head" thereof while the H bits of the other EPs of the SEP are set to a second logical value.

3. The self-adaptable artificial neural network of claim 2 wherein the A bit of the EP in said SEP that is ready to memorize the input vector components or the A bit of the EP in said SEP that is ready to compute the distance between the input vector components and the associated prototype components is set to a first logical value (the other EPs have their A bits set to a second logical value).

4. A self-adaptable artificial neural network comprising :
an artificial neural network (ANN) consisting of a chain of elementary processors (EPs) or neurons wherein each EP is provided with distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) and the activation (A) bits to define its status and communication means capable to transmit this status and the computed distance to at least one of its two neighboring EPs; and,
common memory means shared by said EPs to memorize the prototypes associated thereto, each prototype containing n components.

5. The self-adaptable artificial neural network of claim 4 comprising one group of p adjacent EPs referred to as a "super elementary processor" (SEP), with a memory capacity of pxn wherein the H bit of the first EP of the SEP is set to a first logical value to designate it as the "head" thereof while the H bits of the other EPs of the SEP are set to a second logical value.

6. The self-adaptable artificial neural network of claim 5 wherein the A bit of the EP in said SEP that is ready to memorize the input vector components or the A bit of the EP in said SEP that is ready to compute the distance between the input vector components and the associated prototype components is set to a first logical value (the other EPs have their A bits set to a second logical value) .

7. A method for automatically and dynamically adapting an artificial neural network (ANN) to an input vector of any size during the learning phase comprising the steps of :
a) providing an artificial neural network (ANN) consisting of a chain of elementary processors (EPs) or neurons wherein each EP is provided with memory means to memorize a prototype containing n components and flag means to store a flag value which indicates if the EP is free or not free wherein each EP is provided with circuit means comprising register means to store two control bits referred to as the head (H) and the activation (A) bits to define its status and communication means capable to transmit this status and the computed distance to at least one of its two neighboring EPs;
b) initializing the ANN by setting the A bits of all the EPs to a first logic value and by setting the H bits of all the free EPs to a first logic value;
c) presenting an input vector of r components to the ANN;
d) selecting the first free EP of the ANN;
e) setting its H bit to a second logic value;
f) setting its A bit to a second logic value to activate said first free EP;
g) if the number of input vector components is inferior or equal to n, memorizing all the components of the input vector in said activated EP, else if the number of input vector components is greater than n, memorizing the first n components of the input vector in said activated EP;
h) setting the A bit of the free neighbor of said activated EP to a second logic value and setting the A bit of the previous activated EP to the first logic value;
i) if the number of remaining components of the input vector is inferior or equal to n, memorizing said remaining components in said activated EP, else, if the number of said remaining components is greater than n, memorizing the first n remaining components of said input vector in said activated EP;
j) repeating the last two steps h) and i) until the last component of said input vector has been reached so that the input vector is memorized as a prototype in the ANN.

8. The method of claim 7 wherein at least one category is associated to each memorized prototype.

9. The method of claim 7 further comprising the step of,
k) memorizing one or several categories in the last activated EP.

10. A method for automatically and dynamically adapting an artificial neural network (ANN) to an input vector of any size during the classification phase comprising the steps of:
a) providing an artificial neural network (ANN) consisting of a chain of elementary processors (EPs) or neurons wherein each EP is provided with memory means having memorized a maximum of n components, distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) that is set according to claim 7 and the activation (A) bits to define its status and communication means capable to transmit this status and the computed distance to at least one of its two neighboring EPs;
b) initializing the ANN by setting the A bits of all the EPs to a first logical value and by resetting the distances stored in all the EPs to zero;
c) presenting an input vector of r components to the ANN;
d) selecting the EPs of the ANN which H bits are set to the second logic value according to claim 7;
e) setting their A bit to a second logic value;
f) if the number of input vector components is inferior or equal to n, comparing the r components of said input vector with the first r components of said activated EPs, else if input vector component number is greater than n, comparing the first n components of said input vector with the components memorized in said activated EPs to obtain distances;
g) setting the A bits of the neighbor of said activated EPs to a second logic value and setting the A bits of the previous activated EPs to the first logic value and transmitting said distance of the previous activated EPs to the neighboring activated EP;
h) if the number of remaining components is inferior or equal to n, comparing the remaining components of said input vector with the components of said activated EPs, else, if the number of remaining input vector components is greater than n, comparing the first n remaining components of said input vector with the components memorized in said activated EPs to obtain intermediate resulting distances that are added to said distances;
i) repeating the last two steps g) and h) until the last component of said input vector has been reached, so that all the global distances between the input vector and the prototypes are computed;

11. The method of claim 10 wherein said distances are sorted each time that n input vector components have been compared to n prototype components, i.e. each time that at least one Elementary Processor has been used.

12. The method of claim 11 wherein one category is associated to each memorized prototype.

13. The method of claim 11 wherein one category is associated to each EP.

14. The method of claim 10 wherein one category is associated to each memorized prototype.

15. A method for automatically adjusting the number of components in artificial neural networks with a learning phase and a classification phase comprising the steps of,
a) providing an artificial neural network (ANN) consisting of a chain of elementary processors (EPs) or neurons wherein each EP is provided with memory means to memorize a prototype containing n components, distance evaluation means to compute the distance between an input vector presented to the ANN and the prototype stored therein and flag means to store a flag value which indicates if the EP is free or not free, wherein each EP is provided with circuit means comprising register means to store two control bits referred to as the head (H) and the activation (A) bits to define its status and communication means capable to transmit this status and the computed distance to at least one of its two neighboring EPs;
b) initializing the ANN by setting the H bits and the A bits of all the EPs to a first logical value;
c) setting the distance values stored in all the EPS to zero;
d) presenting an input vector of r components to the ANN;
e) selecting the first free EP of the ANN;
f) setting its H bit to a second logic value;
g) selecting the EPs of the ANN which H bits are set to the second logic value;
h) setting their A bit to a second logic value;
i) if the number of input vector components is inferior or equal to n, comparing the r components of said input vector with the first r components of said activated EPs to obtain distances and memorizing all the components of the input vector in said activated and free EP, else if input vector component number is greater than n, comparing the first n components of said input vector with the components memorized in said activated EPs to obtain distances and memorizing the first n components of the input vector in said activated and free EP;
j) setting the A bits of the neighbor of said activated EPs to the second logic value and setting the A bits of the previous activated EPs to the first logic value and transmitting said distance of the previous activated EPs to the neighboring activated EP;
k) if the number of remaining components is inferior or equal to n, comparing the remaining components of said input vector with the components of said activated EPs to obtain intermediate resulting distances that are added to said distances and memorizing said remaining components in said activated and free EP, else, if the number of remaining input vector components is greater than n, comparing the first n remaining components of said input vector with the components memorized in said activated EPs to obtain intermediate resulting distances that are added to said distances and memorizing the first n remaining components of said input vector in said activated and free EP;
l) repeating the last 2 steps j) and k) until the last component of said input vector has been reached, so that all the global distances between the input vector and the prototypes are computed;
m) confirming or not the memorization of the input vector as prototype depending upon user result and/or resulting distances.
n) repeating the steps c) to m) to present another input vector to the ANN.

16. The method of claim 15 wherein one category is associated to each memorized prototype.
